# EUROPÄISCHE PATENTANMELDUNG

(11) **EP 1 990 240 A2**
(43) Veröffentlichungstag der Anmeldung: **12.11.2008**
(21) Anmeldenummer: 08008450.2
(22) Anmeldetag: 05.05.2008
(51) Int. Cl.: B60R 5/04

(54) **Verschiebbarer Laderaumboden für einen Gepäckraum eines Kraftfahrzeuges**

(30) Priorität: 09.05.2007 DE 102007021626
(71) Anmelder: Bayerische Motoren Werke Aktiengesellschaft, 80809 München (DE)
(72) Erfinder: Bade, Jochen, 85221 Dachau (DE)

(57) **Zusammenfassung**

Es ist bereits ein verschiebbarer Laderaumboden für einen Gepäckraum eines Kraftfahrzeuges bekannt. Aufgabe der Erfindung ist es, einen verschiebbaren Laderaumboden für einen Gepäckraum eines Kraftfahrzeuges zu schaffen, der einen einfachen Aufbau aufweist.

Dies wird dadurch erreicht, dass der Laderaumboden (11) in einen vorderen Ladeboden-Abschnitt (12) und in einen hinteren Ladeboden-Abschnitt (13) unterteilt ist, dass die beiden Ladeboden-Abschnitte (12, 13) in einer nicht verschiebbaren Ausgangslage (29) des Laderaumbodens (11) hintereinander angeordnet sind, dass der hintere Ladeboden-Abschnitt (13) auf eine in den Gepäckraum (2) zeigende Außenfläche (32) des vorderen Ladeboden-Abschnittes (12) montierbar ist, so dass sich eine Laderaumboden-Einheit (39) ergibt, die um eine Länge x₁₃ des hinteren Ladeboden-Abschnittes (13) zwischen den Führungsschienen (18, 19) in Fahrzeuglängsrichtung x verschiebbar ist.

## Beschreibung

Die Erfindung betrifft einen verschiebbaren Laderaumboden für einen Gepäckraum eines Kraftfahrzeuges gemäß dem Oberbegriff des Anspruchs 1.

Aus der DE 103 15 401 A1 ist bereits ein Laderaumbodensystem mit zwei in Fahrzeuglängsrichtung verschiebbaren Laderaumböden bekannt. In einer Ausgangslage sind die beiden Laderaumböden in einem Gepäckraum hinter einer hinteren Sitzanordnung und vor einer Heckklappe angeordnet. Bei einer umgeklappten Rückenlehne der hinteren Sitzanordnung ist der obere Laderaumboden nach vorne klappbar. Ferner ist der untere Laderaumboden in Fahrzeuglängsrichtung zumindest teilweise über eine Ladekante hinaus verschiebbar. Wird der untere Laderaumboden über die Ladekante hinaus verschoben, ist der obere Laderaumboden nach vorne umgeklappt, so dass eine zwischen der hinteren Sitzanordnung und der Heckklappe entstandene Lücke abgedeckt ist, um eine durchgängige Ladefläche zum Transport von Ladegut vorzusehen.

Aufgabe der Erfindung ist es, einen verschiebbaren Laderaumboden für einen Gepäckraum eines Kraftfahrzeuges zu schaffen, der einen einfachen Aufbau aufweist.

Diese Aufgabe wird durch die Merkmale des Anspruchs 1 gelöst.

Der erfindungsgemäße verschiebbare Laderaumboden für einen Gepäckraum eines Kraftfahrzeuges wird in Führungsschienen geführt, die in einem Boden des Gepäckraumes angeordnet sind und die in Fahrzeuglängsrichtung x verlaufen.

Der erfindungsgemäße verschiebbare Laderaumboden ist in einen vorderen Ladeboden-Abschnitt und in einen hinteren Ladeboden-Abschnitt unterteilt. Die beiden Ladeboden-Abschnitte sind in einer nicht verschiebbaren Ausgangslage des Laderaumbodens hintereinander angeordnet. Der hintere Ladeboden-Abschnitt ist auf eine in den Gepäckraum zeigende Außenfläche des vorderen Ladeboden-Abschnittes montierbar, insbesondere klappbar. Durch die Anordnung des hinteren Ladeboden-Abschnittes auf dem vorderen Ladeboden-Abschnitt ergibt eine Laderaumboden-Einheit, die um eine Länge des hinteren Ladeboden-Abschnittes zwischen den Führungsschienen verschiebbar ist. Durch den erfindungsgemäßen verschiebbaren Laderaumboden ergibt sich ein einfaches Verschiebesystem, das wenig Bauraum erfordert und in den Gepäckraum ohne großen Aufwand integrierbar ist

In einer vorteilhaften Ausführungsform sind der vordere Ladeboden-Abschnitt und der hintere Ladeboden-Abschnitt über Gelenke miteinander verbunden.

Die Gelenke sind vorteilhafterweise eingebettete Scharniereinheiten, wobei die jeweilige Scharniereinheit ein Mehrgelenkscharnier sein kann.

Der hintere Ladeboden-Abschnitt ist in einfacher Weise über die Gelenke auf die in den Gepäckraum zeigende Außenfläche des vorderen Ladeboden-Abschnittes klappbar.

Die verschiebbare Laderaumboden-Einheit ist in einer vorteilhaften Ausführungsform aus einer vorderen Position hinter der Rückenlehne bis in eine hintere Position vor einem hinteren Ende des Gepäckraumes und zurück verschiebbar.

Vorteilhafterweise sind Mittel vorgesehen, durch die die verschiebbare Laderaumboden-Einheit in jeder beliebigen Position zwischen der vorderen Position und der hinteren Position verriegelt und entriegelt werden kann.

In einer vorteilhaften Ausführungsform ist der verschiebbare Laderaumboden in zwei gleich große Ladeboden-Abschnitte aufgeteilt.

Der vordere Abschnitt weist vorteilhafterweise Längsränder auf, die in jeweils einem offenen Profil der Führungsschiene geführt sind.

Zwischen den Längsrändern des vorderen Abschnittes ist in einer vorteilhaften Ausführungsform jeweils mindestens ein Schlittensystem vorgesehen, das eine entriegelbare Verriegelungsvorrichtung aufweist, so dass der vordere Abschnitt in jeder beliebigen Position arretierbar und entriegelbar ist.

Der hintere Abschnitt grenzt um einen Spalt beabstandet mit seinen Längsrändern vorteilhafterweise an das offene Profil der Führungsschiene an.

In einer vorteilhaften Ausführungsform liegt ein hinterer Rand des hinteren Abschnittes in der Ausgangslage an einem tiefer gelegten Abschnitt oder einem Vorsprung des Gepäckraumes auf, so dass der hintere Abschnitt in der Ausgangslage zumindest über die Scharniereinheiten und den hinteren Rand mit dem Gepäckraumboden in Verbindung steht.

An einem hinteren Rand des vorderen Abschnittes ist vorteilhafterweise ein Betätigungsmittel vorgesehen, durch das die verschiebbare Laderaumboden-Einheit aus der vorderen Position in die hintere Position und zurück verschiebbar ist.

Das Betätigungsmittel befindet sich in einer vorteilhaften Ausführungsform in einem Einschubfach, das am hinteren Rand des vorderen Abschnitts ausgebildet ist. Das Betätigungselement ist durch ein unter Vorspannung stehendes System aus der Nichtgebrauchslage in eine Gebrauchslage verschiebbar und in der Nichtgebrauchslage verriegelt.

Das Betätigungsmittel dient vorteilhafterweise gleichzeitig als Bedienelement für eine Verriegelungseinrichtung und Entriegelungseinrichtung der verschiebbaren Laderaumboden-Einheit.

Der verschiebbare Laderaumboden bildet in einer vorteilhaften Ausführungsform in der Ausgangslage über den vorderen Abschnitt und den hinteren Abschnitt eine ebene Ladefläche.

In einer vorteilhaften Ausführungsform ist unterhalb des verschiebbaren Laderaumbodens ein Abdeckboden angeordnet. Der Abdeckboden hat vorteilhafterweise eine optische und/oder eine tragende Funktion.

Die in der Ausgangslage nach unten zeigende Außenfläche des hinteren Abschnittes ist vorteilhafterweise mit einem Dekormaterial versehen.

Eine Ausführungsform der Erfindung wird nachstehend anhand der Zeichnungen beispielshalber beschrieben. Dabei zeigen:
- Fig. 1: eine perspektivische Ansicht eines teilweise dargestellten Gepäckraums eines Kraftfahrzeuges, in der sich ein in zwei Abschnitte aufgeteilter, verschiebbarer Laderaumboden in einer Ausgangslage befindet und eine ebene Ladefläche bildet,
- Fig. 2: eine perspektivische Ansicht eines teilweise dargestellten Gepäckraumes entsprechend der Fig. 1, bei der ein hinterer Abschnitt des verschiebbaren Laderaumbodens nach vorne auf einen vorderen Abschnitt geklappt ist,
- Fig. 3: eine perspektivische Ansicht des teilweise dargestellten Gepäckraums der Fig. 1, in der sich der verschiebbare Laderaumboden in der umgeklappten Anordnung befindet und aus der Ausgangslage nach hinten in Richtung einer Ladekante des Kraftfahrzeuges verschoben ist,
- Fig. 4: eine schematische Darstellung einer Schnittansicht von der Seite des in der Fig. 1 gezeigten Gepäckraumbodens, wobei der verschiebbare Laderaumboden sich in der auseinander geklappten Ausgangslage befindet, in der der verschiebbare Laderaumboden mit dem feststehenden Laderaumboden eine ebene Fläche bildet,
- Fig. 5: eine schematische Schnittdarstellung von der Seite entsprechend der Fig.4, bei der der hintere Abschnitt des verschiebbaren Laderaumbodens aus seiner Ausgangslage nach oben in Richtung des vorderen Abschnittes des Laderaumbodens geklappt ist,
- Fig. 6: eine schematische Schnittdarstellung von der Seite des in der Fig. 4 gezeigten Gepäckraumbodens, bei der hintere Abschnitt des verschiebbaren Laderaumbodens vollständig auf den vorderen Abschnitt des verschiebbaren Laderaumbodens geklappt ist, so dass die beiden Abschnitte des verschiebbaren Laderaumbodens eine verschiebbare Einheit bilden und
- Fig. 7: eine schematische Darstellung von der Seite, bei der die verschiebbare Einheit aus der vorderen Ausgangslage in eine hintere Zwischenposition verschoben ist.

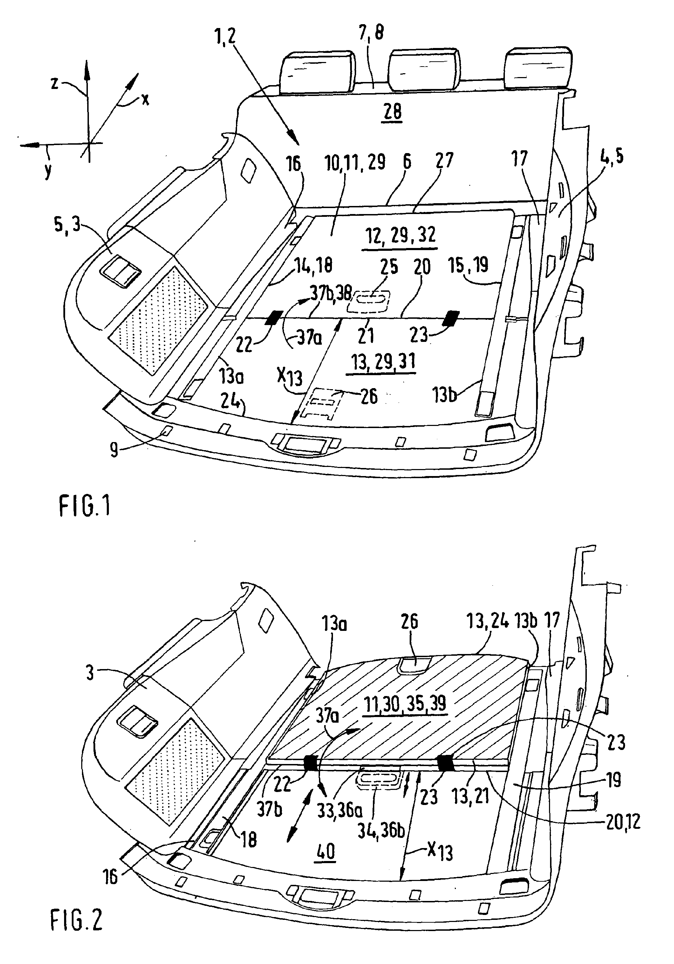

Die Fig. 1 zeigt einen Gepäckraum 2 eines nicht weiter dargestellten Kraftfahrzeuges 1. Der Gepäckraum 2 wird in Fahrzeugquerrichtung y durch jeweils eine Seitenwand 3, 4 einer Karosserie 5 des Kraftfahrzeuges 1 begrenzt. In Fahrzeuglängsrichtung x gesehen, schließt sich an ein vorderes Ende 6 des Gepäckraumes 2 eine Rückenlehne 7 einer hinteren Sitzanordnung 8 des Kraftfahrzeuges 1 an. Ein hinteres Ende 9 des Gepäckraumes 2 wird durch eine nicht dargestellte Heckklappe oder eine Karosseriewand oder dergleichen geschlossen.

Ein Boden 10 des Gepäckraumes 2 ist durch einen verschiebbaren Laderaumboden 11 gebildet, der in einen vorderen Abschnitt 12 und einen hinteren Abschnitt 13 unterteilt ist. An die Längsränder 14, 15 des verschiebbaren Laderaumbodens 11 schließen sich karosseriefeste Bodenabschnitte 16, 17 an.

In der gezeigten Ausführungsform sind in den karosseriefesten Bodenabschnitten 16, 17 jeweils eine Führungsschiene 18, 19 angeordnet, in denen die Längsränder 14, 15 des verschiebbaren Laderaumbodens 11 beispielsweise über jeweils ein Schlittensystem geführt sind.

In einer Ausführungsform ist zwischen den Längsrändern 14, 15 des vorderen Abschnittes 12 jeweils mindestens ein Schlittensystem vorgesehen, das eine entriegelbare Verriegelungsvorrichtung aufweist, so dass der vordere Abschnitt 12 in jeder beliebigen Position arretierbar und entriegelbar ist. Der hintere Abschnitt 13 grenzt mit seinen Längsrändern 13a und 13b an das offene Profil der Führungsschiene 18, 19 an.

Aus der Fig. 1 ist ferner ein hinterer Rand 20 des vorderen Abschnittes 12 und ein dazu gegenüberliegender vorderer Rand 21 des hinteren Abschnittes 13 erkennbar. Die beiden Laderaumboden-Abschnitte 12, 13 sind über Scharniereinheiten 22, 23 miteinander verbunden. In einer Ausführungsform sind die Scharniereinheiten 22, 23 jeweils als ein Mehrgelenkscharnier ausgebildet.

Ein Pfeil 37a deutet die Umklapprichtung des hinteren Abschnittes 13 um eine Drehachse 37b in Richtung des vorderen Abschnittes 12 an. Die Drehachse 37b verläuft in Fahrzeugquerrichtung y in Höhe einer zwischen den Rändern 20 und 21 ausgebildeten Fuge 38. Vor dem hinteren Rand 20 des vorderen Abschnittes 12 und vor einem hinteren Rand 24 des hinteren Abschnittes 13 ist jeweils ein Betätigungsmittel 25, 26 vorgesehen.

Das jeweilige Betätigungsmittel 25, 26 kann beispielsweise ein aus einer horizontalen Lage herausklappbarer Griff oder eine Vertiefung oder eine Aussparung sein. Ein vorderer Rand 27 des vorderen Abschnittes 12 grenzt an eine Rückseite 28 der Rückenlehne 7 an. In der in der Fig. 1 gezeigten Darstellung befindet sich der verschiebbare Laderaumboden 11 in seiner Ausgangslage 29, in der die beiden Abschnitte 12 und 13 des verschiebbaren Laderaumbodens 11 hintereinander angeordnet sind.

Der hintere Rand 24 des hinteren Abschnittes 13 liegt in der Ausgangslage 29 an einem tiefer gelegten Abschnitt oder einem Vorsprung des Gepäckraumes 2 auf, so dass der hintere Abschnitt 13 in der Ausgangslage 29 zumindest über die Scharniereinheiten 22, 23 und den hinteren Rand 24 mit dem Gepäckraumboden 10 in Verbindung steht.

In der Fig. 2 ist der hintere Abschnitt 13 auf den vorderen Abschnitt 12 umgeklappt. Die beiden aufeinander liegenden Abschnitte 12, 13 des verschiebbaren Laderaumbodens 11 bilden eine verschiebbare Laderaumboden-Einheit 39. Bei der verschiebbaren Laderaumboden-Einheit 39 liegt die in der Fig. 1 gezeigte Außenfläche 31 des hinteren Abschnittes 13 auf der in der Fig. 1 gezeigten Außenfläche 32 des vorderen Abschnittes 12 auf. Die verschiebbare Laderaumboden-Einheit 39 befindet sich in der Fig. 2 in einer vorderen Position 30. Die Laderaumboden-Einheit 39 ist um eine Länge x₁₃ des hinteren Ladeboden-Abschnittes 13 zwischen den Führungsschienen 18, 19 in Fahrzeuglängsrichtung x verschiebbar.

Am hinteren Rand 20 des vorderen Abschnittes 12 ist in einem Einschubfach 33 ein Griff 34 des Betätigungsmittels 25 verschiebbar angeordnet. Der Griff 34 ist beispielsweise über ein Push-Push-System aus seiner versenkten Position im hinteren Rand 20 des vorderen Abschnittes 12 in eine ausgefahrene Position 36 verfahrbar. Ferner sind in der Fig. 2 die Scharniereinheiten 22, 23 erkennbar. Der Pfeil 37a zeigt die Umklapprichtung um die Drehachse 37b an.

Aus optischen und/oder funktionalen Gründen ist unterhalb des Laderaumbodens 11 ein unterer Abdeckboden 40 angeordnet. Der Abdeckboden 40 kann dabei auch eine Tragfunktion haben, so dass beispielsweise nach der Anordnung eines Ladeguts auf die verschiebbare Laderaumboden-Einheit 39 ein weiteres Ladegut auf den offen gelegten Abdeckboden 40 abstellbar ist. Wenn der hintere Abschnitt 13 auf dem vorderen Abschnitt 12 aufliegt, ist die rückseitige Außenfläche 35 des hinteren Abschnittes 13 um die Dicke des hinteren Abschnittes 13 von den karosseriefesten Bodenabschnitten 16, 17 beabstandet. Ein auf der verschiebbaren Laderaumboden-Einheit 39 befindliches Ladegut ist somit ohne Kontakt zu den karosseriefesten Bodenabschnitten 16, 17 verschiebbar.

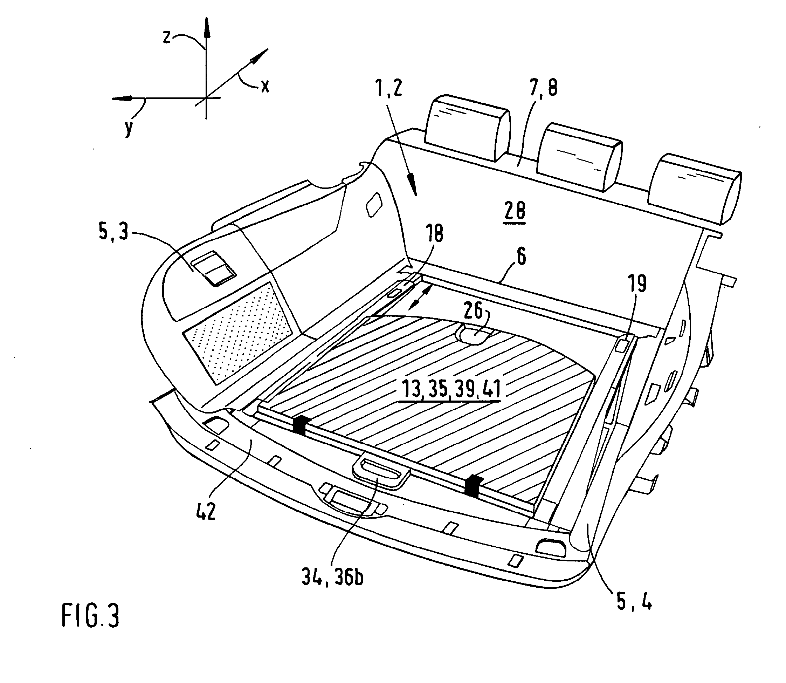

Die Fig. 3 zeigt die verschiebbare Laderaumboden-Einheit 39 in einer hinteren Position 41 in der Nähe einer Ladekante 42 der Karosserie 5. Die Außenfläche 35 des hinteren Abschnittes 13 kann in einer Ausführungsform mit einem Dekormaterial versehen sein, um eine hochwertige Optik zu bieten.

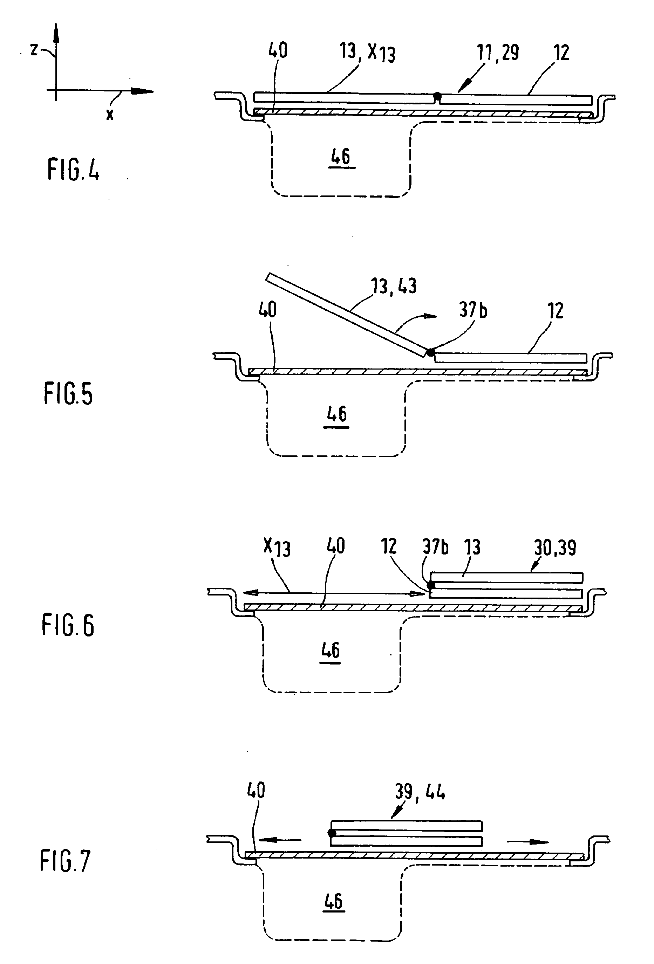

In der Fig. 4 ist die in der Fig. 1 abgebildete Ausgangslage 29 gezeigt. Die Fig. 5 zeigt eine Zwischenposition 43, in der der hintere Abschnitt 13 in Richtung auf den vorderen Abschnitt 12 geklappt wird. Eine vordere Position 30 der verschiebbaren Laderaumboden-Einheit 39 ist in der Fig. 6 dargestellt.

In der Fig. 7 befindet sich die verschiebbare Laderaumboden-Einheit 39 in einer hinteren Zwischenposition 44. Die hintere Zwischenposition 44 der verschiebbaren Laderaumboden-Einheit 39 liegt zwischen der in der Fig. 3 gezeigten hinteren Position 41 und der in den Fig. 2 und 6 gezeigten vorderen Position 30 der verschiebbaren Laderaumboden-Einheit 39.

Ferner ist aus den Fig. 4 bis 7 ersichtlich, dass der Abdeckboden 40 eine unter dem Laderaumboden 11 befindliche Mulde 46 abdeckt.

## Patentansprüche

1. Verschiebbarer Laderaumboden (11) für einen Gepäckraum (2) eines Kraftfahrzeuges (1), wobei der Gepäckraum (2) in Fahrzeugquerrichtung y jeweils von einer Seitenwand (3, 4) einer Karosserie (5) begrenzt ist, wobei der Gepäckraum (2) in Fahrzeuglängsrichtung x nach vorne von einer Rückenlehne (7) einer Sitzanordnung (8) umgeben ist und in Fahrzeuglängsrichtung x nach hinten vor einer Heckklappe oder einer Karosseriewand oder einem Kofferraumdeckel oder dergleichen endet, wobei in einem Boden (10) des Gepäckraumes (2) Führungsschienen (18, 19) angeordnet sind, die in Fahrzeuglängsrichtung x verlaufen, wobei zwischen den Führungsschienen (18, 19) ein Laderaumboden (11) angeordnet ist,
**dadurch gekennzeichnet, dass** der Laderaumboden (11) in einen vorderen Ladeboden-Abschnitt (12) und in einen hinteren Ladeboden-Abschnitt (13) unterteilt ist, dass die beiden Ladeboden-Abschnitte (12, 13) in einer nicht verschiebbaren Ausgangslage (29) des Laderaumbodens (11) hintereinander angeordnet sind, dass der hintere Ladeboden-Abschnitt (13) auf eine in den Gepäckraum (2) zeigende Außenfläche (32) des vorderen Ladeboden-Abschnittes (12) montierbar ist, so dass sich eine Laderaumboden-Einheit (39) ergibt, die um eine Länge x₁₃ des hinteren Ladeboden-Abschnittes (13) zwischen den Führungsschienen (18, 19) in Fahrzeuglängsrichtung x verschiebbar ist.

2. Verschiebbarer Laderaumboden nach Anspruch 1,
**dadurch gekennzeichnet, dass** der vordere Ladeboden-Abschnitt (12) und der hintere Ladeboden-Abschnitt (13) über Gelenke (22, 23) miteinander verbunden sind.

3. Verschiebbarer Laderaumboden nach Anspruch 2,
**dadurch gekennzeichnet, dass** die Gelenke (22, 23) eingebettete Scharniereinheiten (22, 23) sind.

4. Verschiebbarer Laderaumboden nach Anspruch 3, **dadurch gekennzeichnet, dass** die jeweilige Scharniereinheit (22, 23) ein Mehrgelenkscharnier ist.

5. Verschiebbarer Laderaumboden nach einem der vorhergehenden Ansprüche, **dadurch gekennzeichnet, dass** der hintere Ladeboden-Abschnitt (13) über die Gelenke (22, 23) auf die in den Gepäckraum (2) zeigende Außenfläche (32) des vorderen Ladeboden-Abschnittes (12) klappbar ist.

6. Verschiebbarer Laderaumboden nach einem der vorhergehenden Ansprüche, **dadurch gekennzeichnet, dass** die verschiebbare Laderaumboden-Einheit (39) aus einer vorderen Position (30) hinter der Rückenlehne (7) bis in eine hintere Position (41) vor einem hinteren Ende des Gepäckraumes (2) und zurück verschiebbar ist.

7. Verschiebbarer Laderaumboden nach einem der vorhergehenden Ansprüche, **dadurch gekennzeichnet, dass** Mittel vorgesehen sind, durch die die verschiebbare Laderaumboden-Einheit (39) in jeder beliebigen Position zwischen der vorderen Position (30) und der hinteren Position (41) verriegelt und entriegelt werden kann.

8. Verschiebbarer Laderaumboden nach einem der vorhergehenden Ansprüche, **dadurch gekennzeichnet, dass** der verschiebbare Laderaumboden (11) in zwei gleich große Ladeboden-Abschnitte (12, 13) aufgeteilt ist.

9. Verschiebbarer Laderaumboden nach einem der vorhergehenden Ansprüche, **dadurch gekennzeichnet, dass** der vordere Abschnitt (12) Längsränder (14, 15) aufweist, die in jeweils einem offenen Profil der Führungsschiene (18, 19) geführt sind.

10. Verschiebbarer Laderaumboden nach einem der vorhergehenden Ansprüche, **dadurch gekennzeichnet, dass** zwischen den Längsrändern (14, 15) des vorderen Abschnittes (12) jeweils mindestens ein Schlittensystem vorgesehen ist, das eine entriegelbare Verriegelungsvorrichtung aufweist, so dass der vordere Abschnitt (12) in jeder beliebigen Position arretierbar und entriegelbar ist.

11. Verschiebbarer Laderaumboden nach einem der vorhergehenden Ansprüche, **dadurch gekennzeichnet, dass** der hintere Abschnitt (13) mit seinen Längsrändern (13a und 13b) an das offene Profil der Führungsschiene (18, 19) um einen Spalt beabstandet angrenzt.

12. Verschiebbarer Laderaumboden nach einem der vorhergehenden Ansprüche,
**dadurch gekennzeichnet, dass** ein hinterer Rand (24) des hinteren Abschnittes (13) in der Ausgangslage (29) an einem tiefer gelegten Abschnitt oder einem Vorsprung des Gepäckraumes (2) aufliegt, so dass der hintere Abschnitt (13) in der Ausgangslage (29) zumindest über die Scharniereinheiten (22, 23) und den hinteren Rand (24) mit dem Gepäckraumboden (10) in Verbindung steht.

13. Verschiebbarer Laderaumboden nach einem der vorhergehenden Ansprüche,
**dadurch gekennzeichnet, dass** an einem hinteren Rand (20) des vorderen Abschnittes (12) ein Betätigungsmittel (25, 34) vorgesehen ist, durch das die verschiebbare Laderaumboden-Einheit (39) aus der vorderen Position (30) in die hintere Position (41) und zurück verschiebbar ist.

14. Verschiebbarer Laderaumboden nach einem der vorhergehenden Ansprüche,
**dadurch gekennzeichnet, dass** das Betätigungsmittel (25, 34) sich in einem Einschubfach (33) befindet, das am hinteren Rand (20) des vorderen Abschnitts (12) ausgebildet ist und dass das Betätigungsmittel (25, 34) durch ein unter Vorspannung stehendes System aus der Nichtgebrauchslage in eine Gebrauchslage verschiebbar ist und dass das Betätigungsmittel (25, 34) in der Nichtgebrauchslage verriegelt ist.

15. Verschiebbarer Laderaumboden nach Anspruch 14,
**dadurch gekennzeichnet, dass** das Betätigungsmittel (25, 34) gleichzeitig als Bedienelement für eine Verriegelungseinrichtung und Entriegelungseinrichtung der verschiebbaren Laderaumboden-Einheit (39) dient.

16. Verschiebbarer Laderaumboden nach einem der vorhergehenden Ansprüche,
**dadurch gekennzeichnet, dass** der verschiebbare Laderaumboden (11) in der Ausgangslage (29) über den vorderen Abschnitt (12) und den hinteren Abschnitt (13) eine ebene Ladefläche bildet.

17. Verschiebbarer Laderaumboden nach einem der vorhergehenden Ansprüche,
**dadurch gekennzeichnet, dass** unterhalb des verschiebbaren Laderaumbodens (11) ein Abdeckboden (40) angeordnet ist.

18. Verschiebbarer Laderaumboden nach einem der vorhergehenden Ansprüche,
**dadurch gekennzeichnet, dass** der Abdeckboden (40) eine optische und/oder eine tragende Funktion hat.

19. Verschiebbarer Laderaumboden nach einem der vorhergehenden Ansprüche,
**dadurch gekennzeichnet, dass** die in der Ausgangslage (29) nach unten zeigende Außenfläche (35) des hinteren Abschnittes (13) mit einem Dekormaterial versehen ist.
